# DEMANDE DE BREVET EUROPEEN

(11) **EP 3 096 268 A1**
(43) Date de publication de la demande: **23.11.2016**
(21) Numéro de dépôt: 16382214.1
(22) Date de dépôt: 17.05.2016
(51) Int. Cl.: G06K 13/067, G06K 13/08, G07C 9/00, E05B 35/00, E05B 47/00, G06K 7/00

(54) **SERRURE, PLUS PARTICULIÈREMENT SERRURE ÉLECTRONIQUE QUI FONCTIONNE GRÂCE À UNE CARTE**

(30) Priorité: 22.05.2015 ES 201530709
(71) Demandeur: Ojmar S.A., 20870 Elgoibar (Gipuzkoa) (ES)
(72) Inventeur: SENDIN MARTIN, Ricardo, 20870 Elgoibar (Gipuzkoa) (ES)
(74) Mandataire: Urizar Barandiaran, Miguel Angel

(57) **Abrégé**

Serrure électronique qui fonctionne grâce à une carte et est composée d'un moyen d'identification frontal pour valider l'ouverture/fermeture ; et d'une carcasse (3) avec un module porteur du mécanisme électronique avec un capteur (5) pour l'activer ou le désactiver à l'insertion d'une carte (7) nécessaire à son fonctionnement.

La carcasse (3) dispose, à l'intérieur, d'un support (4) linéairement déplaçable ; ledit support (4) définissant, au moins, une bande/zone (41) susceptible d'activer le mécanisme électronique grâce au capteur (5) lorsque celui-ci se maintient face à ladite bande/zone (41) au déplacement du support (4) par une carte (7) correcte.

Ledit support (4) dispose d'un mécanisme de récupération qui le remet à sa position initiale au retrait de la carte (7).

Un dispositif de rétention (6) maintient la carte correcte (7) en position opérationnelle correcte pendant qu'elle ne se débloque pas à la volonté de l'utilisateur, pour la retirer.

## Description

### Objet de l'invention

L'objet de l'invention se réfère à une serrure, plus particulièrement à une serrure électronique qui fonctionne grâce à une carte ; cette serrure faisant partie de celles qui sont composées d'un clavier de commande, d'un module porteur du mécanisme électronique et d'une carcasse dans laquelle s'insère la carte nécessaire à son fonctionnement.

### Antécédents de l'invention

Dans l'état actuel de la technique, les serrures électroniques qui fonctionnent avec des pièces de monnaie ou des cartes, sont connues. Par exemple et entre autres, dans le document ES2142230 (du propre solliciteur) et le document ES2320516 d'autres titulaires, des serrures de ce type sont décrites.

Les serrures électroniques actionnables grâce à une carte et composées d'un clavier sont y compris connues (par exemple et entre autres dans les documents ES2112170, EP0152678 et US6655180) ou d'autres moyens d'identification frontale tels que les cartes, les lecteurs de poignets ou les clés avec transpondeur (par exemple et entre autres dans les documents EP1236182, ES2129003 et ES2229929, ce dernier du propre solliciteur).

Un problème non résolu dans les serrures électroniques actuelles qui fonctionnent avec des cartes conventionnelles réside dans leur faible sécurité. Y compris celles qui disposent d'un clavier de commande offrent une sécurité plus faible puisque :
- les capteurs/détecteurs utilisent directement les caractéristiques ou l'information contenue dans la propre carte (par exemple en détectant une ou plusieurs couleurs déterminées), si bien qu'il est possible qu'une serrure puisse se débloquer en utilisant plusieurs cartes différentes (de fait, dans beaucoup de cas, n'importe quelle carte débloque la serrure) ; ou
- des solutions de blocage qui empêchent l'extraction de la carte lorsque l'on utilise la serrure ne sont pas utilisées, si bien qu'il est possible d'utiliser une même carte pour bloquer/débloquer et maintenir bloquées/débloquées plusieurs serrures simultanément.

### Description de l'invention

Dans l'utilisation de la serrure, la carte ou le jeton servent d'outil pour ouvrir ou fermer la serrure suite à l'introduction correcte de l'identification de l'utilisateur.

La serrure objet de l'invention, résout ces problèmes en incorporant des solutions techniques de positionnement et de blocage qui permettent uniquement le fonctionnement de la serrure lorsque la carte correcte est utilisée en position correcte.

L'invention se compose :
- d'électronique pour détecter la présence d'une carte
- d'un orifice pour insérer une carte ou un support
- de moyens pour faciliter l'insertion ou l'extraction de la carte
- de moyens pour retenir la carte correctement insérée
- de moyens pour libérer la carte de sa position correcte
- de moyens d'aide pour la détection de la position correcte.

Les capteurs/détecteurs utilisent indirectement les caractéristiques ou l'information contenue dans la carte, de sorte que l'activation/désactivation ne dépend pas directement de la carte mais d'un mécanisme intérieur qui s'actionne, seulement lorsque la bonne carte est dans la position correcte.

De façon préférentielle, la serrure objet de l'invention, faisant partie de celles qui sont composées d'un moyen d'identification frontal pour valider l'ouverture/fermeture ; d'un module porteur du mécanisme électronique avec un capteur pour l'activer ou le désactiver ; et d'une carcasse qui contient une fente pour l'insertion de la carte nécessaire au fonctionnement, se caractérise parce que la carcasse est pourvue d'un corps et d'un couvercle et dispose :
- d'un support linéairement déplaçable ; ledit support définissant, au moins, une bande/zone susceptible d'activer le mécanisme électronique du module grâce au capteur tant que celui-ci se maintient face à ladite bande/zone lorsque le support est déplacé par une bonne carte ; et ledit support disposant d'un mécanisme de récupération qui le remet à sa position initiale au retrait de la carte ;
- d'un dispositif de rétention qui maintient la bonne carte dans la position opérationnelle lorsqu'elle ne se débloque pas à la volonté de l'utilisateur, pour la retirer.

À partir de cette conception basique, toutes les réalisations n'altérant, ni ne changeant ou ne modifiant pas le fondement proposé sont incluses dans l'objet de l'invention, par exemple et plus particulièrement :
- que le mécanisme de récupération cité qui remet le support à sa position initiale lors du retrait de la carte soit un ressort ;
- que le capteur cité soit, indistinctement, un capteur optique (qui détecte par exemple, une couleur déterminée dans la bande/zone citée du support) ; un capteur magnétique (dans le cas où la bande/zone citée du support est une bande magnétique) ; ou un lecteur électronique (dans le cas où la bande/zone citée du support est un identificateur électronique).

Le dispositif de rétention cité est composé d'une languette élastiquement déformable par rapport au corps ou au couvercle de la carcasse dont elle fait partie.

Ladite languette peut indistinctement, être superposée à la propre carcasse ou au couvercle, auquel cas elle dispose d'une tête/tige émergente pour effectuer la rétention pour elle-même ou une coopération avec un orifice/distributeur conformé de façon positionnelle dans la carte.

De façon préférentielle, et pour qu'elle soit compatible avec les solutions existantes, la carte disposera d'un trou dans une position concrète de sorte qu'elle puisse affleurer et être retenue par clippage de la tête/tige à l'insertion ou la libération de la carte à la volonté de l'utilisateur, en déformant élastiquement la languette pour libérer la tête/tige de l'orifice/distributeur et expulser la carte par l'action du mécanisme de récupération qui fait partie du support.

D'autres configurations et avantages de l'invention peuvent être déduits à partir de la description suivante, et des revendications dépendantes.

### Description des dessins

Pour mieux comprendre l'objet de l'invention, une forme préférentielle de réalisation, pouvant recevoir des changements accessoires ne dénaturant pas son fondement est représentée sur les figures jointes. Dans ce cas :
La figure 1 représente une vue frontale de la serrure de l'invention, avec son couvercle (31) monté sur le corps (30) de la carcasse (3) et avec la carte (7) insérée.

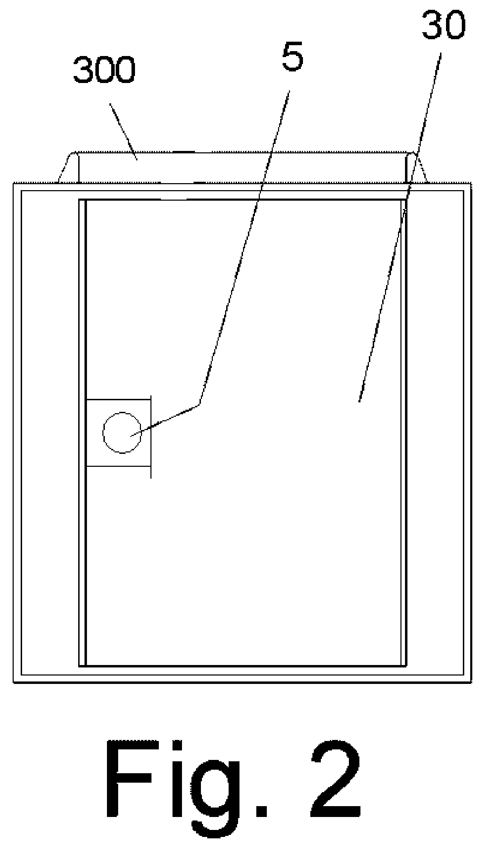

La figure 2 représente une vue frontale du corps (30) de la carcasse (3) sans la carte (7) et sans son couvercle (31) pour observer le capteur (5) en position opérationnelle.

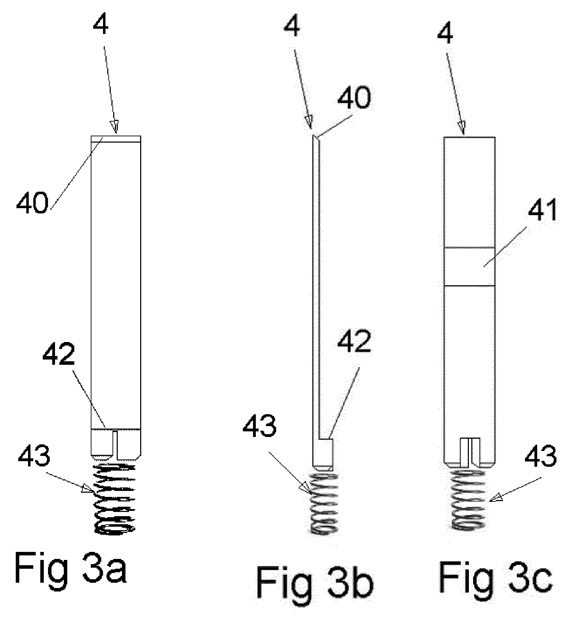

Les figures 3a, 3b et 3c représentent respectivement les vues frontale, de profil et arrière du support (4) avec le mécanisme de récupération qui, dans ce cas, est un ressort (43).
La figure 4a représente une vue frontale de la carte (7) pour un exemple de réalisation avec orifice (62).
La figure 4b représente une vue frontale de la carte (7) pour un exemple de réalisation sans orifice (62).
Les figures 5a, 5b et 5c représentent respectivement les vues frontale, de profil et postérieure du couvercle (31) avec le dispositif de rétention (6) pour un exemple de réalisation.
La figure 6 représente une vue similaire à la figure 1, pour un autre exemple de réalisation du dispositif de rétention (6).

### Description d'une réalisation préférentielle

Ci-dessous est décrit un exemple de réalisation pratique, non limitative, de la présente invention. D'autres modes de réalisation dans lesquels des changements accessoires ne dénaturant pas son fondement sont introduits ne sont absolument pas écartés.

L'objet de l'invention est une serrure, plus particulièrement une serrure électronique qui fonctionne grâce à une carte.

Ce type de serrures est essentiellement composé d'un moyen d'identification frontal (un clavier, un lecteur de poignet, une clé avec transpondeur ou tout autre) pour valider l'ouverture/fermeture ; d'un mécanisme électronique avec un capteur (5) pour l'activer ou le désactiver ; et d'une carcasse (3) avec un logement (300) dans lequel s'insère une carte (7) nécessaire au fonctionnement.

La serrure objet de l'invention est composée :
- d'une carcasse (3), composée à son tour d'un corps (30) et d'un couvercle (31) ;
- d'électronique pour détecter la présence de la carte (7) nécessaire au fonctionnement ; ledit mécanisme électronique fait partie de la propre carcasse (3) ;
- de moyens pour faciliter l'insertion ou l'extraction de la carte (7) ;
- de moyens pour retenir la carte (7) correctement insérée et pour la libérer de sa position correcte ; et
- de moyens d'aide pour la détection de la position correcte.

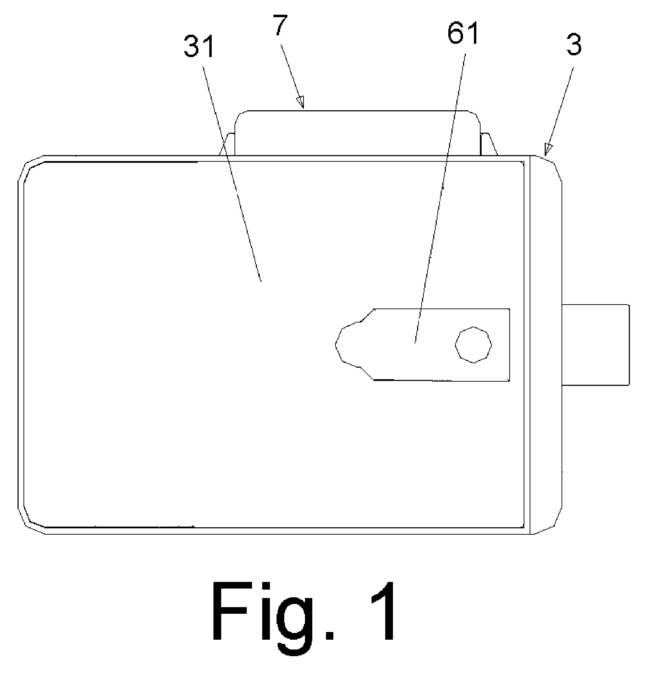

Pour l'exemple de réalisation représenté sur la figure 1, le corps (30) fait partie de la carcasse (3). Le capteur (5) est disposé à l'intérieur du corps (30) de la carcasse (3).

Dans le corps (30) un logement (300) est disposé pour insérer la carte (7) et dans le couvercle (31) sont disposés les moyens pour retenir la carte (7) correctement insérée et pour la libérer de sa position correcte.

Les moyens cités pour faciliter l'insertion ou l'extraction de la carte (7) se matérialisent sur un support (4) linéairement déplaçable ; ledit support (4) définissant, au moins, une bande/zone (41) susceptible d'activer le mécanisme électronique au moyen du capteur (5) pendant que celui-ci se maintient face à ladite bande/zone (41), le support (4) étant déplacé par une carte (7) correcte, dont l'effet est que le support (4) définit une place (42) constituée sur la butée d'appui.

Ledit support (4) dispose également :
- d'une rampe supérieure en biseau (40) pour faciliter la tête de la carte (7) ; et
- d'un mécanisme de récupération qui retourne à sa position initiale lors du retrait de la carte (7) et qui, par la réalisation représentée, est un ressort (43).

Les moyens cités pour retenir la carte (7) correctement insérée et pour la libérer de sa position correcte, se matérialisent dans un dispositif de rétention (6) qui est composé d'une languette (61), élastiquement déformable par rapport au corps (30) ou au couvercle (31) de la carcasse (3) dont elle est configurée.

À partir de cette conception basique, toutes les réalisations n'altérant, ni ne changeant ou ne modifiant pas le fondement proposé sont incluses dans l'objet de l'invention.

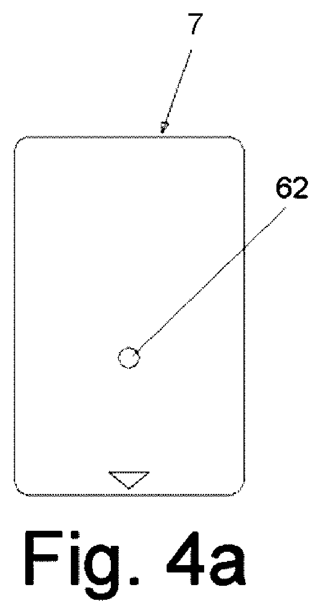

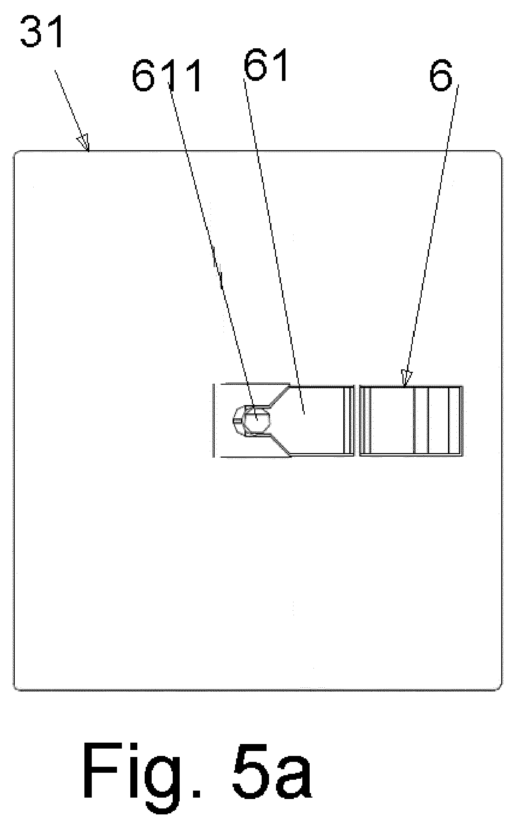

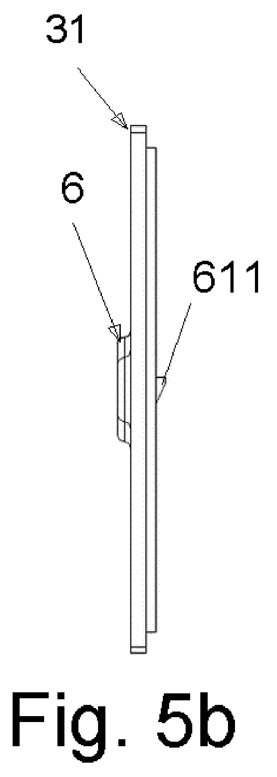

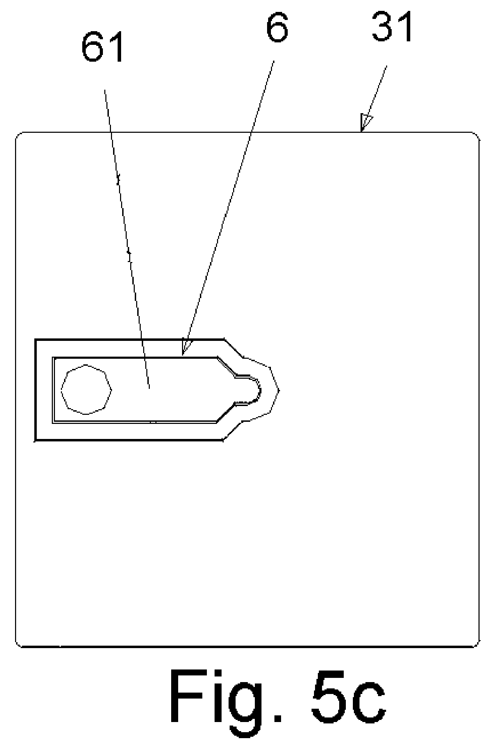

Pour la réalisation représentée sur les figures 4a, conjointement aux figures 5a, 5b et 5c, la languette (61) du dispositif de rétention (6) cité possède une tête/tige (611) émergente vers l'intérieur ; dont la position correspond avec un orifice/distributeur (62) configuré dans la carte (7) de sorte que ledit orifice/distributeur (32) puisse affleurer et retenir par clippage la tête/tige (611) à l'insertion de la carte (7) ou la libérer à la volonté de l'utilisateur, en déformant élastiquement la languette (61), libérant la tête/tige (611) de l'orifice/distributeur (62) et en expulsant la carte (7) par l'action du mécanisme de récupération faisant partie du support (4).

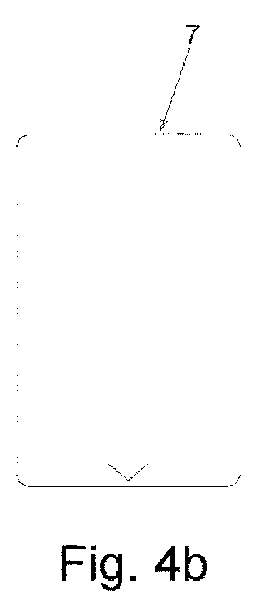

Pour la réalisation représentée sur la figure 4b, conjointement aux figures 5a, 5b et 5c, dans lesquelles la carte (7) ne présente pas d'orifice/distributeur (62), la tête/tige (611) fixe la carte (7) par pression, frottement ou réglage.

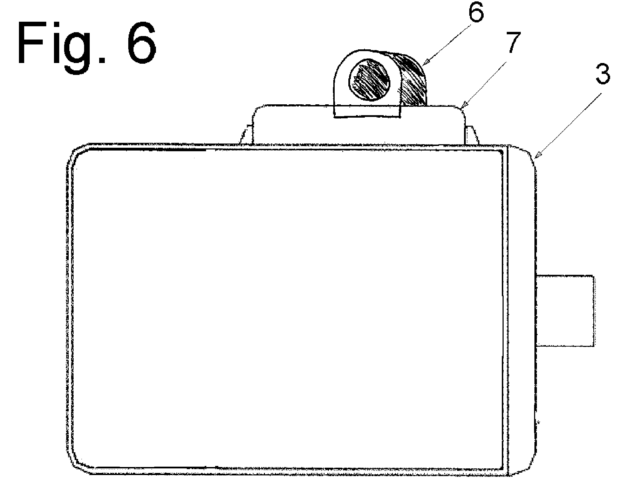

Pour la réalisation représentée sur la figure 6, la languette (61) constitue tout le dispositif de rétention cité, et est superposée sur le logement (300) de la propre carcasse (3).

Aux effets de l'invention, il est également indistinct que le capteur (5) cité soit :
- un capteur optique, qui détecte un niveau de lumière et une couleur déterminée sur la bande/zone (41) citée du support (4) ; ou
- un capteur magnétique, dans le cas où la bande/zone (41) citée du support (4) est une bande magnétique ; ou
- un lecteur électronique, dans le cas où la bande/zone (41) citée du support (4) est un identificateur électronique.

Les matériaux, dimensions, proportions, et, en général, tous les autres détails accessoires ou secondaires n'altérant, ni ne changeant ou ne modifiant pas le fondement proposé pourront être variables.

Les termes dans lesquels est rédigé ce mémoire sont certains et reflètent fidèlement l'objet décrit, et devront être entendus dans leur sens le plus large, et cela en aucun cas de manière limitative.

## Revendications

1. Serrure, plus particulièrement une serrure électronique qui fonctionne grâce à une carte et qui, faisant partie de celles qui sont composées d'un moyen d'identification frontal pour valider l'ouverture/fermeture ; d'une carcasse (3) comportant le mécanisme électronique avec un capteur (5) pour l'activer ou le désactiver à l'insertion d'une carte (7) nécessaire au fonctionnement, se caractérise parce que la carcasse (3) contient :
- un module électronique ;
- un corps (30) sur lequel est disposé un support (4) linéairement déplaçable ; ledit support (4) définissant, au moins, une bande/zone (41) susceptible d'activer le mécanisme électronique grâce au capteur (5) lorsqu'il est maintenu face à ladite bande/zone (41), le support (4) étant déplacé par une carte (7) correcte ; et ledit support (4) disposant d'un mécanisme de récupération qui le remet à sa position initiale au retrait de la carte (7) ; et
- un dispositif de rétention (6) qui maintient la carte (7) en position opérationnelle pendant d'elle ne se débloque pas à la volonté de l'utilisateur, pour la retirer.

2. Serrure, selon revendication 1, caractérisée parce que le mécanisme de récupération cité qui remet le support (4) à sa position initiale au retrait de la carte (7) est un ressort (43).

3. Serrure, selon revendication 1, caractérisée parce que le support (4) est élastique ou élastiquement déformable, lui-même constituant le mécanisme de récupération cité.

4. Serrure, selon revendication 1, caractérisée parce que le capteur (5) cité est un capteur optique, qui détecte un niveau de lumière.

5. Serrure, selon revendication 1, caractérisée parce que le capteur (5) cité est un capteur optique, qui détecte une couleur déterminée dans la bande/zone (41) citée du support (4).

6. Serrure, selon revendication 1, caractérisée parce que le capteur (5) cité est un capteur magnétique et la bande/zone (41) du support (4) est une bande magnétique.

7. Serrure, selon revendication 1, caractérisée parce que le capteur (5) cité est un lecteur électronique, et la bande/zone (41) citée du support (4) est un identificateur électronique.

8. Serrure, selon une des revendications précédentes, caractérisée parce que le dispositif de rétention (6) cité est composé d'une languette (61) pour retenir la carte (7) avec un trou élastiquement déformable par rapport au corps (30) ou au couvercle (31) de la carcasse (3) dont elle est configurée.

9. Serrure, selon revendication 8, caractérisée parce que la languette (61) du dispositif de rétention (6) cité contient une tête/tige (611) émergente vers l'intérieur, cette tête/tige (911) fixe directement la carte (7) par pression, frottement ou réglage.

10. Serrure, selon revendication 8, caractérisée parce que la languette (61) du dispositif de rétention (6) cité contient une tête/tige (611) émergente vers l'intérieur; en correspondance positionnelle avec un orifice/distributeur (62) conformé sur la carte (7) ; de sorte que ledit orifice/distributeur (62) puisse affleurer et retenir par clippage la tête/tige (611) à l'insertion de la carte (7) ou la libérer à la volonté de l'utilisateur, en déformant élastiquement la languette (61) pour libérer la tête/tige (611) de l'orifice/distributeur (62) et en expulsant la carte (7) par l'action du mécanisme de récupération qui fait partie du support (4).

11. Serrure, selon revendication 8, caractérisée parce que la languette (61) du dispositif de rétention (6) cité est superposée sur le logement (300) de la propre carcasse (3).
